# EUROPEAN PATENT SPECIFICATION

(11) **EP 3 264 226 B1**
(45) Date of publication and mention of the grant of the patent: **29.12.2021**
(21) Application number: 17176431.9
(22) Date of filing: 16.06.2017
(51) Int. Cl.: G06F 1/32, H04W 52/02

(54) **PIN CONTROL METHOD AND DEVICE**
PINSTEUERUNGSVERFAHREN UND -VORRICHTUNG
PROCÉDÉ ET DISPOSITIF DE COMMANDE DE BROCHE

(30) Priority: 28.06.2016 WO PCT/CN2016/087473
(43) Date of publication of application: 03.01.2018
(73) Proprietor: Beijing Xiaomi Mobile Software Co., Ltd., Beijing 100085 (CN)
(72) Inventor: TAN, Kangxi, Beijing, 100085 (CN); HE, Li, Beijing, 100085 (CN); ZHANG, Jun, Beijing, 100085 (CN)
(74) Representative: Hughes, Andrea Michelle

(56) References cited:
- CN-A- 105 094 968
- Anonymous: "CC3100 UART Host Interface - Texas Instruments Wiki", , 9 June 2014 (2014-06-09), XP055414094, Retrieved from the Internet: URL:http://processors.wiki.ti.com/index.ph p?title=CC3100_UART_Host_Interface&oldid=1 78092 [retrieved on 2017-10-10]
- Anonymous: "Sleep Mode - Mikrocontroller.net", , 8 May 2016 (2016-05-08), XP055414330, Retrieved from the Internet: URL:https://web.archive.org/web/2016050803 1440/https://www.mikrocontroller.net/artic les/Sleep_Mode [retrieved on 2017-10-10]

## Description

### TECHNICAL FIELD

The present disclosure generally relates to the field of electronic equipment, and more particularly to a pin control method and device.

### BACKGROUND

A master chip and peripheral chips are arranged in a main board of a television. The master chip may be connected with the peripheral chips through multiple pins, and each peripheral chip is configured to implement a respectively corresponding function. For example, a Bluetooth chip is configured to implement a Bluetooth data transmission function. A Clear To Send (CTS) pin of the master chip is usually connected with a Request To Send (RTS) pin of the peripheral chip, and a Transmit Data (TXD) pin of the master chip is usually connected with a Receive Data (RXD) pin of the peripheral chip. In one case, when the peripheral chip is in a working state, the RTS pin is configured into an effective state. The master chip may send data to the peripheral chip through the TXD pin, and the peripheral chip may receive the data through the RXD pin. In another case, when the peripheral chip is in a sleep state, the RTS pin is in an ineffective state, and the RXD pin in the peripheral chip does not receive any data. When there is no demand for data transmission between the master chip and the peripheral chip and the peripheral chip has no other work task, the peripheral chip may be in the sleep state.

In a possible scenario, if a grounding design of the main board is relatively poor, the master chip may not effectively shield an interference signal. When the television receives an instantaneous high voltage (such as static electricity of a human body) and the peripheral chip is in the working state, the master chip may also transmit the interference signal to the peripheral chip through the TXD pin, which may cause an operating abnormality of the peripheral chip. Related technologies can be found in Anonymous: "CC3100 UART Host Interface - Texas Instruments Wiki", June 9, 2014 (2014-06-09), XP055414094.

### SUMMARY

Accordingly, an embodiment of the present disclosure provides a pin control method and device, in accordance with claims which follow.

According to a first aspect of the embodiment of the present disclosure, a pin control method is provided as defined in claim 1.

Conventionally, when a peripheral chip is in the working state, an RTS pin of the peripheral chip is in the effective state all the time. When the interference signal exists in the master chip, an RXD pin in the peripheral chip may receive an interference signal from the master chip, which may cause an operating abnormality of the peripheral chip. According to the embodiments of the present disclosure, when the sleep pin of the first chip receives the transmission completion signal sent by the second chip, a first RTS pin is set into the ineffective state according to the transmission completion signal, solving the problem of the operating abnormality of the peripheral chip. When the sleep pin receives the transmission completion signal sent by the second chip, the first RTS pin is set into the ineffective state, which makes that the RXD pin on the first chip may not receive an interference signal existing in the second chip, no matter whether the first chip enters the sleep state. The condition of operating abnormality of the first chip due to reception of the interference signal in the second chip is avoided.

According to an exemplary embodiment, the step that the RTS pin is set into the effective state according to the data sending signal when the sleep pin receives the data sending signal sent by the second chip may include that:
when the sleep pin is changed from a first level to a second level, the RTS pin is set into a third level, the third level being configured to represent that the RTS pin is in the effective state,
wherein the first level may be a high level and the second level may be a low level, or, the first level may be a low level and the second level may be a high level; and the third level may be a high level or a low level.

According to an exemplary embodiment, the step that the RTS pin is set into the ineffective state according to the transmission completion signal when the sleep pin receives the transmission completion signal sent by the second chip may include that:
when the sleep pin is changed from the second level to the first level, the RTS pin is set into a fourth level, the fourth level being configured to represent that the RTS pin is in the ineffective state,
wherein the first level may be a high level and the second level may be a low level, or, the first level may be a low level and the second level may be a high level; and the fourth level may be a high level or a low level, wherein the fourth level is different from the third level; if the third level is a high level, the fourth level is a low level; and if the third level is a low level, the fourth level is a high level.

[deleted]

According to an exemplary embodiment, the first chip may be a master chip, and the second chip may be any one of a Bluetooth chip, a Wireless-Fidelity (Wi-Fi) chip, a radio frequency chip, a power chip, a Light Emitting Diode (LED) chip and an audio and video chip; or, the first chip may be any one of the Bluetooth chip, the Wi-Fi chip, the radio frequency chip, the power chip, the LED chip and the audio and video chip, and the second chip may be the master chip.

According to a second aspect of the embodiment of the present disclosure, a pin control method is provided as defined in claim 4.

According to an exemplary embodiment, the step that whether the RTS pin on the first chip is in the effective state is detected by using the CTS pin may include that: whether the RTS pin on the first chip is a third level is detected through the CTS pin, the third level being configured to represent that the RTS pin is in the effective state and the third level being a high level or a low level.

According to an exemplary embodiment, the step that the data sending signal is sent to the first chip through the wakeup pin may include that:
when the wakeup pin is changed from a first level to a second level, the data sending signal is sent to the first chip through the wakeup pin,
wherein the first level may be a high level and the second level may be a low level, or, the first level may be a low level and the second level may be a high level.

According to an exemplary embodiment, the step that the transmission completion signal is sent to the first chip through the wakeup pin when data transmission is completed may include that:
when the wakeup pin is changed from the second level to the first level, the transmission completion signal is sent to the first chip through the wakeup pin,
wherein the first level may be a high level and the second level may be a low level, or, the first level may be a high level and the second level may be a high level.

According to an exemplary embodiment, the first chip may be a master chip, and the second chip may be any one of a Bluetooth chip, a Wi-Fi chip, a radio frequency chip, a power chip, an LED chip and an audio and video chip; or, the first chip may be any one of the Bluetooth chip, the Wi-Fi chip, the radio frequency chip, the power chip, the LED chip and the audio and video chip, and the second chip may be the master chip.

According to a third aspect of the embodiment of the present disclosure, a pin control device is provided as defined in claim 8 and 10.

The advantages and technical effects of the device according to the invention correspond to those of the method presented above.

According to a particular embodiment, the first receiving module may also be configured to, when the sleep pin is changed from a first level to a second level, set the RTS pin into a third level, the third level being configured to represent that the RTS pin is in the effective state,
wherein the first level may be a high level and the second level may be a low level, or, the first level may be a low level and the second level may be a high level; and the third level may be a high level or a low level.

According to a particular embodiment, the second receiving module may also be configured to, when the sleep pin is changed from the second level to the first level, set the RTS pin into a fourth level, the fourth level being configured to represent that the RTS pin is in the ineffective state,
wherein the first level may be a high level and the second level may be a low level, or, the first level may be a low level and the second level may be a high level; and the third level may be a high level or a low level.

[deleted]

According to a particular embodiment, the first chip may be a master chip, and the second chip may be any one of a Bluetooth chip, a Wi-Fi chip, a radio frequency chip, a power chip, an LED chip and an audio and video chip; or, the first chip may be any one of the Bluetooth chip, the Wi-Fi chip, the radio frequency chip, the power chip, the LED chip and the audio and video chip, and the second chip may be the master chip.

According to a fourth aspect of the embodiment of the present disclosure, a pin control device is provided, which may be applied to a second chip, the device including: a first sending module configured to send a data sending signal to a first chip through a wakeup pin, the wakeup pin being a pin connected with a sleep pin on the first chip;
a state detection module configured to detect, by using a CTS pin whether an RTS pin on the first chip is in an effective state, the CTS pin being a pin connected with the RTS pin on the first chip;
a data sending module configured to, if the RTS pin on the first chip is in the effective state, send data to the first chip through a TXD pin, the TXD pin being a pin connected with an RXD pin on the first chip; and
a second sending module configured to, when data transmission is completed, send a transmission completion signal to the first chip through the wakeup pin for the first chip to set the RTS pin into an ineffective state according to the transmission completion signal and to determine according to a current running condition whether to enter a sleep state.

According to a particular embodiment, the state detection module may also be configured to detect, by using the CTS pin whether the RTS pin on the first chip is a third level, the third level being configured to represent that the RTS pin is in the effective state and the third level being a high level or a low level.

According to a particular embodiment, the first sending module may also be configured to, when the wakeup pin is changed from a first level to a second level, send the data sending signal to the first chip through the wakeup pin,
wherein the first level may be a high level and the second level may be a low level, or, the first level may be a low level and the second level may be a high level.

According to a particular embodiment, the second sending module may also be configured to, when the wakeup pin is changed from the second level to the first level, send the transmission completion signal to the first chip through the wakeup pin,
wherein the first level may be a high level and the second level may be a low level, or, the first level may be a high level and the second level may be a high level.

According to a particular embodiment, the first chip may be a master chip, and the second chip may be any one of a Bluetooth chip, a Wi-Fi chip, a radio frequency chip, a power chip, an LED chip and an audio and video chip; or, the first chip may be any one of the Bluetooth chip, the Wi-Fi chip, the radio frequency chip, the power chip, the LED chip and the audio and video chip, and the second chip may be the master chip.

In one particular embodiment, the steps of the pin control method are determined by computer program instructions.

Consequently, according to a fifth aspect, the disclosure is also directed to a computer program for executing the steps of a pin control method as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

### BRIEF DESCRIPTION OF THE DRAWINGS

In order to describe the technical solutions in the embodiment of the present disclosure more clearly, the accompanying drawings required by descriptions about the embodiment will be simply introduced below. Obviously, the accompanying drawings described below are only some embodiments of the present disclosure, and those skilled in the art may also obtain other accompanying drawings according to these accompanying drawings on the premise of no creative work.
Fig. 1 is a schematic diagram illustrating an implementation environment involved in a pin control method, according to a part of exemplary embodiments.
Fig. 2 is a method flow chart showing a pin control method, according to an exemplary embodiment.
Fig. 3 is a method flow chart showing a pin control method, according to an exemplary embodiment.
Fig. 4A is a method flow chart showing a pin control method, according to an exemplary embodiment.
Fig. 4B is a schematic diagram illustrating a pin control method, according to an exemplary embodiment.
Fig. 5 is a block diagram of a pin control device, according to an exemplary embodiment.
Fig. 6 is a block diagram of a pin control device, according to another exemplary embodiment.
Fig. 7 is a block diagram of a pin control device, according to an exemplary embodiment.

### DETAILED DESCRIPTION

In order to make a purpose, technical solutions and advantages of the present disclosure clearer, implementation modes of the present disclosure will be further described below with reference to the accompanying drawings in detail.

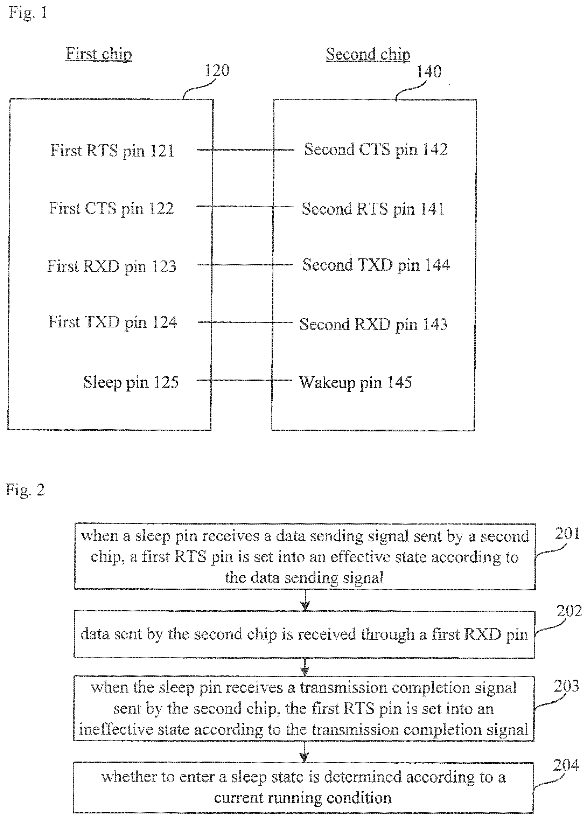

Fig. 1 is a schematic diagram illustrating an implementation environment involved in a pin control method, according to a part of exemplary embodiments. As shown in Fig. 1, the implementation environment may include: a first chip 120 and a second chip 140.

The first chip 120 includes: a first RTS pin 121, a first CTS pin 122, a first RXD pin 123, a first TXD pin 124 and a sleep pin 125.

The second chip 140 includes: a second RTS pin 141, a second CTS pin 142, a second RXD pin 143, a second TXD pin 144 and a wakeup pin 145.

The first RTS pin 121 in the first chip 120 is connected with the second CTS pin 142 in the second chip 140. The first CTS pin 122 in the first chip 120 is connected with the second RTS pin 141 in the second chip 140. The first RXD pin 123 in the first chip 120 is connected with the second TXD pin 144 in the second chip 140. The first TXD pin 124 in the first chip 120 is connected with the second RXD pin 143 in the second chip 140. The sleep pin 125 in the first chip 120 is connected with the wakeup pin 145 in the second chip 140.

The first RTS pin 121 is configured to indicate that the first chip 120 has been prepared, and the first RXD pin 123 may receive data. The second CTS 142 is configured to judge whether data may be sent to the first chip 120, that is, the second chip 140 detects whether the first RTS pin 121 is in an effective state by using the second CTS pin 142. When the first RTS pin 121 is in the effective state, the second chip 140 may send the data to the first chip 120, and the first chip 120 may also receive the data through the first RXD pin 123. When the first RTS pin 121 is in an ineffective state, the first RXD pin 123 on the first chip 120 is not allowed to receive the data.

A sleep control method in the related technology includes that: when the first chip 120 is in a working state, the second chip 140 sends data to the first chip 120 through the second RXD pin 144, and the first chip 120 receives the data sent by the second chip 140 through the first RXD pin 123; after transmission of data to be transmitted of the second chip 140 is completed, the second chip 140 sends a transmission completion signal to the first chip 120 through the wakeup pin 145; when the sleep pin 125 on the first chip 120 receives the transmission completion signal, whether to enter a sleep state is determined according to a current running condition of the first chip 120; if the first chip 120 determines itself to enter the sleep state according to the current running condition, the first chip 120 sets the first RTS pin 121 into the ineffective state according to the transmission completion signal, and the first RXD pin 123 does not receive the data; and if the first chip 120 determines itself to keep a working state according to the current running condition, the first RTS pin 121 on the first chip 120 is kept set into the effective state, and the first RXD pin 123 may receive the data.

A pin control method disclosed by the embodiment of the present disclosure includes that: when the first chip 120 receives the transmission completion signal sent by the second chip 140 through the sleep pin 125, the first chip 120 sets the first RTS pin 121 into the ineffective state according to the transmission completion signal; and meanwhile, the first chip 120 determines according to the current running condition whether to enter the sleep state. That is, when the first chip 120 sets the first RTS pin 121 into the ineffective state according to the transmission completion signal, the first chip 120 may be in the sleep state, and may also be in the working state.

Fig. 2 is a method flow chart showing a pin control method, according to an exemplary embodiment. The embodiment is described with application of the pin control method to a first chip 120 in an implementation environment shown in Fig. 1 as an example. The pin control method includes the following steps.

Step 201: when a sleep pin receives a data sending signal sent by a second chip, a first RTS pin is set into an effective state according to the data sending signal.

Wherein, the sleep pin is a pin connected with a wakeup pin on the second chip and the first RTS pin is a pin connected with a CTS pin on the second chip;

Step 202: data sent by the second chip is received through a first RXD pin.

Wherein, the first RXD pin is in the effective state when the first RTS pin is in the effective state, and the first RXD pin is a pin connected with a second TXD pin on the second chip.

Step 203: when the sleep pin receives a transmission completion signal sent by the second chip, the first RTS pin is set into an ineffective state according to the transmission completion signal.

Step 204: whether to enter a sleep state is determined according to a current running condition.

Conventionally, when a peripheral chip is in the working state, an RTS pin of the peripheral chip is in the effective state all the time. When the interference signal exists in the master chip, an RXD pin in the peripheral chip may receive an interference signal from the master chip, which may cause an operating abnormality of the peripheral chip. From the above, according to the pin control method provided by the embodiment, when the sleep pin of the first chip receives the transmission completion signal sent by the second chip, the first RTS pin is set into the ineffective state according to the transmission completion signal, solving the problem of the operating abnormality of the peripheral chip. When the sleep pin receives the transmission completion signal sent by the second chip, the first RTS pin is set into the ineffective state, which makes that the RXD pin on the first chip may not receive an interference signal existing in the second chip, no matter whether the first chip enters the sleep state. The condition of operating abnormality of the first chip due to reception of the interference signal in the second chip is avoided.

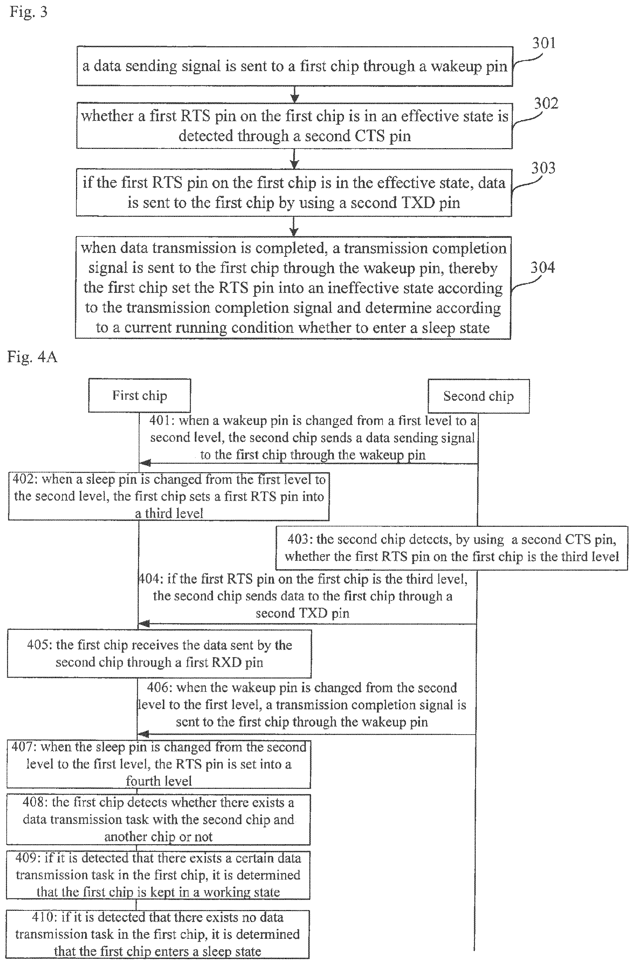

Fig. 3 is a method flow chart showing a pin control method, according to an exemplary embodiment. The embodiment is described with application of the pin control method to a second chip 140 in an implementation environment shown in Fig. 1. The pin control method includes the following steps.

Step 301: a data sending signal is sent to a first chip through a wakeup pin.

Wherein, the wakeup pin is a pin connected with a sleep pin on the first chip.

Step 302: whether a first RTS pin on the first chip is in an effective state is detected by using a second CTS pin.

Wherein, the second CTS pin is a pin connected with the first RTS pin on the first chip.

Step 303: if the first RTS pin on the first chip is in the effective state, data is sent to the first chip through a second TXD pin.

Wherein, the second TXD pin is a pin connected with a first RXD pin on the first chip.

Step 304: when data transmission is completed, a transmission completion signal is sent to the first chip through the wakeup pin for the first chip to set the RTS pin into an ineffective state according to the transmission completion signal and to determine according to a current running condition whether to enter a sleep state.

In the related technology, when a peripheral chip is in the working state, an RTS pin of the peripheral chip is in the effective state all the time. When the interference signal exists in the master chip, an RXD pin in the peripheral chip may receive an interference signal from the master chip, which may cause an operating abnormality of the peripheral chip. From the above, according to the pin control method provided by the embodiment, when data transmission is completed, the transmission completion signal is sent to the first chip through the wakeup chip, thereby the first chip sets the RTS pin into the ineffective state according to the transmission completion signal, solving the problem of the operating abnormality of the peripheral chip. When a sleep pin of the first chip receives the transmission completion signal sent by the second chip, the first RTS pin is set into the ineffective state, which makes that the RXD pin on the first chip may not receive an interference signal existing in the second chip, no matter whether the first chip enters the sleep state. The condition of operating abnormality of the first chip due to reception of the interference signal in the second chip is avoided.

Fig. 4A is a method flow chart showing a pin control method, according to an exemplary embodiment. The embodiment is described with application of the pin control method to an implementation environment shown in Fig. 1. The pin control method includes the following steps.

Step 401: when a wakeup pin is changed from a first level to a second level, a second chip sends a data sending signal to a first chip through the wakeup pin.

Wherein, the wakeup pin is a pin connected with a sleep pin on the first chip.

When the first chip is in a working state, if the second chip is required to send data to the first chip, the wakeup pin in the second chip is changed from the first level to the second level. When the wakeup pin is changed from the first level to the second level, the second chip sends the data sending signal to the first chip through the wakeup pin. The data sending signal is configured to notify the first chip to prepare to receive the data and the second chip has a demand for data transmission.

Wherein, the first level is a high level and the second level is a low level. Or, the first level is a low level and the second level is a high level.

Step 402: when a sleep pin is changed from the first level to the second level, the first chip sets a first RTS pin into a third level.

Wherein, the first RTS pin is a pin connected with a second CTS pin on the second chip. The third level is configured to represent that the first RTS pin is in an effective state.

Since the sleep pin on the first chip is connected with the wakeup pin on the second chip, the sleep pin on the first chip is also changed from the first level to the second level when the wakeup pin on the second chip is changed from the first level to the second level. When the sleep pin on the first chip is changed from the first level to the second level, the first chip sets the first RTS pin into the third level.

When the first RTS pin on the first chip is in the effective state, a first RXD pin on the first chip may receive the data.

For example: it is supposed that the first level is a low level, the second level is a high level and the third level is a high level. When the wakeup pin of the second chip is changed from a low level to a high level, the sleep pin on the first chip is also changed from the low level to the high level; and at this moment, the first chip sets the first RTS pin into a high level. That is, the first RTS pin is set into the effective state, and the first RXD pin on the first chip may receive the data.

In the embodiment, descriptions are made only with the condition that the first RTS pin is in the effective state when being at a high level as an example. Optionally, the first RTS pin may also be in the effective state when being at a low level, which will not be specifically limited in the embodiment.

Step 403: the second chip detects, by using a second CTS pin whether the first RTS pin on the first chip is the third level.

Wherein, the second CTS pin is a pin connected with the first RTS pin on the first chip. The third level is configured to represent that the first RTS pin is in the effective state; and the third level is a high level or a low level.

Since the second CTS pin on the second chip is connected with the first RTS pin on the first chip, the second CTS pin on the second chip is in the effective state when the first RTS pin on the first chip is in the effective state. The second chip detects whether the first RTS pin on the first chip is in the effective state by using the second CTS pin.

In a detection process of Step 403, two kind of detection results may be obtained. If it is detected that the first RTS pin on the first chip is in an ineffective state, it is indicated that the first RXD pin on the first chip does not receive the data. If it is detected that the first RTS pin on the first chip is in the effective state, Step 404 is executed.

Step 404: if the first RTS pin on the first chip is the third level, the second chip sends data to the first chip through a second TXD pin.

Wherein, the second TXD pin is a pin connected with the first RXD pin on the first chip.

If the second CTS pin detects that the first RTS pin on the first chip is the third level, it is indicated that the first RTS pin on the first chip is in the effective state and the first RXD pin may receive the data sent by the second chip, and then the second chip sends the data to the first chip through the second TXD pin.

Step 405: the first chip receives the data sent by the second chip through a first RXD pin.

Wherein, the first RXD pin is in the effective state when the first RTS pin is in the effective state.

Step 406: when the wakeup pin is changed from the second level to the first level, a transmission completion signal is sent to the first chip through the wakeup pin.

When data transmission of the second chip to the first chip is completed, the wakeup pin in the second chip is changed from the second level to the first level. When the wakeup pin is changed from the second level to the first level, the second chip sends the transmission completion signal to the first chip through the wakeup pin, and the transmission completion signal is configured to notify that data transmission to the first chip is completed and the second chip has no demand for data transmission.

Step 407: when the sleep pin is changed from the second level to the first level, the RTS pin is set into a fourth level.

Wherein, the fourth level is configured to represent that the RTS pin is in the ineffective state; and the fourth level is a high level or a low level. It is important to note that the fourth level is different from the third level. If the third level is a high level, the fourth level is a low level; and if the third level is a low level, the fourth level is a high level.

Since the sleep pin on the first chip is connected with the wakeup pin on the second chip, the sleep pin on the first chip is also changed from the second level to the first level when the wakeup pin on the second chip is changed from the second level to the first level. When the sleep pin on the first chip is changed from the second level to the first level, the first chip sets the first RTS pin into the fourth level.

When the first RTS pin on the first chip is in the ineffective state, the first RXD pin on the first chip does not receive any data.

For example: it is supposed that the first level is a low level, the second level is a high level and the fourth level is a low level. When the wakeup pin of the second chip is changed from a high level to a low level, the sleep pin on the first chip is also changed from the high level to the low level; and at this moment, the first chip sets the first RTS pin into a low level. That is, the first RTS pin is set into the ineffective state, and the first RXD pin on the first chip may not receive the data.

In the embodiment, descriptions are made only with the condition that the first RTS pin is in the ineffective state when being at a low level as an example. Optionally, the first RTS pin may also be in the ineffective state when being at a high level, which will not be specifically limited in the embodiment.

Step 408: the first chip detects whether there exists a data transmission task with the second chip or another chip.

When the sleep pin is changed from the second level to the first level, the first chip detects whether there exists a data transmission task with the second chip or another chip.

The data transmission task refers to whether the first chip is sending data to the second chip or another chip and whether the first chip is receiving data sent by the second chip or another chip.

In a detection process of Step 408, two kind of detection results may be obtained. If it is detected that there exists a certain data transmission task in the first chip, Step 409 is executed. If it is detected that there exists no data transmission task in the first chip, Step 410 is executed.

Step 409: if it is detected that there exists a certain data transmission task in the first chip, it is determined that the first chip is kept in a working state.

If it is detected that there exists a certain data transmission task in the first chip, it is indicated that data interaction still exists between the first chip and the second chip or another chip. It is determined that the first chip is kept in the working state.

Step 410: if it is detected that there exists no data transmission task in the first chip, it is determined that the first chip enters a sleep state.

If it is detected that there exists no data transmission task in the first chip, it is indicated that there exists no data interaction between the first chip and the second chip or with another chip. It is determined that the first chip enters the sleep state.

In the related technology, when a peripheral chip is in the working state, an RTS pin of the peripheral chip is in the effective state all the time. When the interference signal exists in the master chip, an RXD pin in the peripheral chip may receive an interference signal from the master chip, which may cause an operating abnormality of the peripheral chip. From the above, according to the pin control method provided by the embodiment, when the sleep pin of the first chip receives the transmission completion signal sent by the second chip, the first RTS pin is set into the ineffective state according to the transmission completion signal, solving the problem of the operating abnormality of the peripheral chip. When the sleep pin receives the transmission completion signal sent by the second chip, the first RTS pin is set into the ineffective state, which makes that the RXD pin on the first chip may not receive an interference signal existing in the second chip, no matter whether the first chip enters the sleep state. The condition of operating abnormality of the first chip due to reception of the interference signal in the second chip is avoided.

It is important to additionally note that: in the embodiment shown in Fig. 4A, the first chip is a master chip, and the second chip is any one of a Bluetooth chip, a Wi-Fi chip, a radio frequency chip, a power chip, an LED chip and an audio and video chip. Or, the first chip is any one of the Bluetooth chip, the Wi-Fi chip, the radio frequency chip, the power chip, the LED chip and the audio and video chip, and the second chip is the master chip.

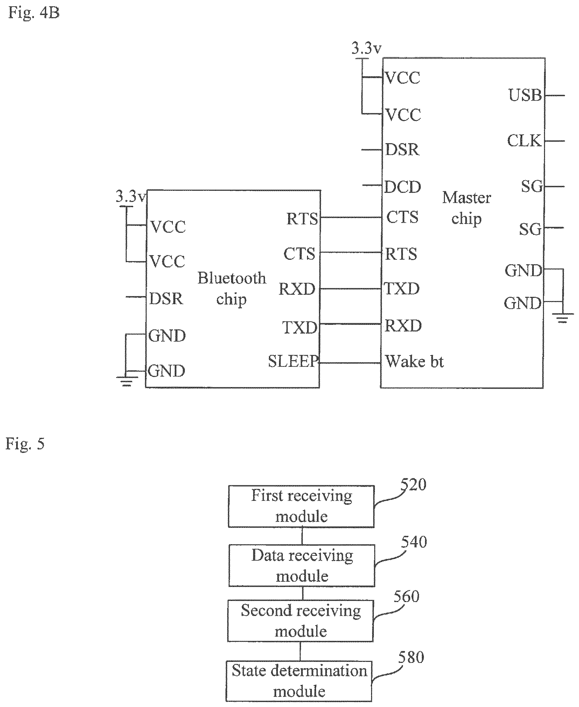

In an exemplary example, as shown in Fig. 4B, it is supposed that a first chip is a Bluetooth chip and a second chip is a master chip. The first RTS pin is the RTS pin in the Bluetooth chip, the first CTS pin is the CTS pin in the Bluetooth chip, the first RXD pin is the RXD pin in the Bluetooth chip, the first TXD pin is the TXD pin in the Bluetooth chip and the sleep pin is the SLEEP pin in the Bluetooth chip. The second RTS pin is the RTS pin in the master chip, the second CTS pin is the CTS pin in the master chip, the second RXD pin is the RXD pin in the master chip, the second TXD pin is the TXD pin in the master chip and the wakeup pin is the Wake bt pin in the master chip. A specific pin control method includes that: when the master chip is required to send data to the Bluetooth chip, a data sending signal is sent to the Bluetooth chip through the Wake bt pin at first, and the Bluetooth chip sets the first RTS pin into an effective state according to the data sending signal; when the second CTS pin of the master chip detects that the first RTS pin is in the effective state, the master chip sends the data to the Bluetooth chip through the second TXD pin, and the Bluetooth chip receives the data through the first RXD pin; and when the master chip completes data sending, a transmission completion signal is sent to the Bluetooth chip through the Wake bt pin, and the Bluetooth chip sets the first RTS pin into an ineffective state according to the transmission completion signal, and determines according to a current running condition whether to enter a sleep state. Optionally, the Bluetooth chip may also include a Data Set Ready (DSR) pin, a Volt Current Condenser (VCC) pin and a Ground (GND) pin. The master chip may also include: a DSR pin, a Data Carrier Detect (DCD) pin, a VCC pin, a GND pin, a Universal Serial Bus (USB) pin, a Clock (CLK) pin and a Signal Ground (SG) pin.

The below is a device embodiment of the present disclosure, which may be configured to execute the method embodiment of the present disclosure. Details undisclosed in the device embodiment of the present disclosure refer to the method embodiment of the present disclosure.

Fig. 5 is a block diagram of a pin control device, according to an exemplary embodiment. As shown in Fig. 5, the pin control device is applied to a first chip 120 in an implementation environment shown in Fig. 1. The pin control device includes, but is not limited to:
a first receiving module 520 configured to, when a sleep pin receives a data sending signal sent by a second chip, set a first RTS pin into an effective state according to the data sending signal, the sleep pin being a pin connected with a wakeup pin on the second chip and the first RTS pin being a pin connected with a second CTS pin on the second chip;
a data receiving module 540 configured to receive data sent by the second chip through a first RXD pin, the first RXD pin being in the effective state when the first RTS pin is in the effective state and the first RXD pin being a pin connected with a second TXD pin on the second chip;
a second receiving module 560 configured to, when the sleep pin receives a transmission completion signal sent by the second chip, set the first RTS pin into an ineffective state according to the transmission completion signal; and
a state determination module 580 configured to determine according to a current running condition whether to enter a sleep state.

Conventionally, when a peripheral chip is in the working state, an RTS pin of the peripheral chip is in the effective state all the time. When the interference signal exists in the master chip, an RXD pin in the peripheral chip may receive an interference signal from the master chip, which may cause an operating abnormality of the peripheral chip. From the above, according to the pin control device provided by the embodiment, when the sleep pin of the first chip receives the transmission completion signal sent by the second chip, the first RTS pin is set into the ineffective state according to the transmission completion signal, solving the problem of the operating abnormality of the peripheral chip. When the sleep pin receives the transmission completion signal sent by the second chip, the first RTS pin is set into the ineffective state, which makes that the RXD pin on the first chip may not receive an interference signal existing in the second chip, no matter whether the first chip enters the sleep state. The condition of operating abnormality of the first chip due to reception of the interference signal in the second chip is avoided.

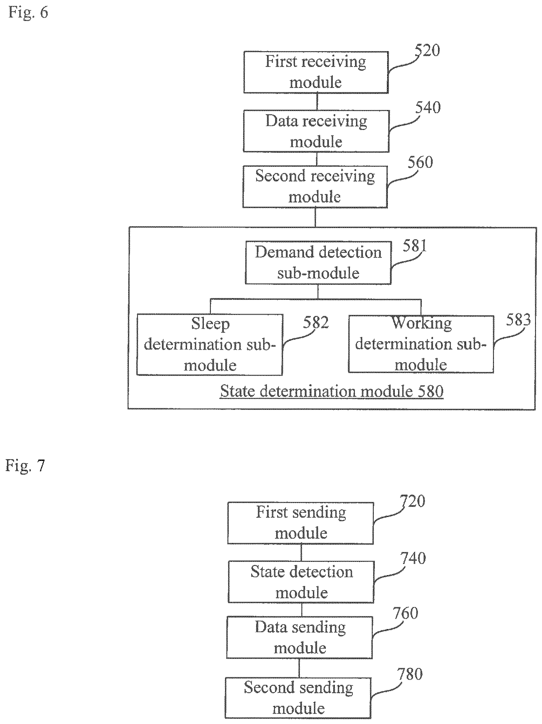

Fig. 6 is a block diagram of a pin control device, according to another exemplary embodiment. As shown in Fig. 6, the pin control device is applied to a first chip 120 in an implementation environment shown in Fig. 1. The pin control device includes, but is not limited to the following modules.

A first receiving module 520 is configured to, when a sleep pin receives a data sending signal sent by a second chip, set a first RTS pin into an effective state according to the data sending signal, the sleep pin being a pin connected with a wakeup pin on the second chip and the first RTS pin being a pin connected with a second CTS pin on the second chip.

Optionally, the first receiving module 520 is further configured to, when the sleep pin is changed from a first level to a second level, set the first RTS pin into a third level, the third level being configured to represent that the first RTS pin is in the effective state.

Wherein, the first level is a high level and the second level is a low level. Or, the first level is a low level and the second level is a high level. And the third level is a high level or a low level.

A data receiving module 540 is configured to receive data sent by the second chip through a first RXD pin, the first RXD pin being in the effective state when the first RTS pin is in the effective state and the first RXD pin being a pin connected with a second TXD pin on the second chip.

A second receiving module 560 is configured to, when the sleep pin receives a transmission completion signal sent by the second chip, set the first RTS pin into an ineffective state according to the transmission completion signal.

Optionally, the second receiving module 560 is further configured to, when the sleep pin is changed from the second level to the first level, set the first RTS pin into a fourth level, the fourth level being configured to represent that the RTS pin is in the ineffective state.

Wherein, the first level is a high level and the second level is a low level, or, the first level is a low level and the second level is a high level; and the third level is a high level or a low level.

A state determination module 580 is configured to determine according to a current running condition whether to enter a sleep state.

Optionally, the state determination module 580 includes: a demand detection sub-module 581, a sleep determination sub-module 582 and a working determination sub-module 583.

The demand detection sub-module 581 is configured to detect whether there exists a data transmission task with the second chip or another chip.

The sleep determination sub-module 582 is configured to, if there exists no data transmission task, determine to enter the sleep state.

The working determination sub-module 583 is configured to, if there exists a certain data transmission task, determine to keep a working state.

Optionally, the first chip is a master chip, and the second chip is any one of a Bluetooth chip, a Wi-Fi chip, a radio frequency chip, a power chip, an LED chip and an audio and video chip. Or, the first chip is any one of the Bluetooth chip, the Wi-Fi chip, the radio frequency chip, the power chip, the LED chip and the audio and video chip, and the second chip is the master chip.

Conventionally, when a peripheral chip is in the working state, an RTS pin of the peripheral chip is in the effective state all the time. When the interference signal exists in the master chip, an RXD pin in the peripheral chip may receive an interference signal from the master chip, which may cause an operating abnormality of the peripheral chip. From the above, according to the pin control device provided by the embodiment, when the sleep pin of the first chip receives the transmission completion signal sent by the second chip, the first RTS pin is set into the ineffective state according to the transmission completion signal, and whether to enter the sleep state is determined according to the current running condition, solving the problem of the operating abnormality of the peripheral chip. When the sleep pin receives the transmission completion signal sent by the second chip, the first RTS pin is set into the ineffective state, which makes that the RXD pin on the first chip may not receive an interference signal existing in the second chip, no matter whether the first chip enters the sleep state. The condition of operating abnormality of the first chip due to reception of the interference signal in the second chip is avoided.

Fig. 7 is a block diagram of a pin control device, according to an exemplary embodiment. As shown in Fig. 7, the pin control device is applied to a second chip 140 in an implementation environment shown in Fig. 1. The pin control device includes, but is not limited to:
a first sending module 720 configured to send a data sending signal to a first chip through a wakeup pin, the wakeup pin being a pin connected with a sleep pin on the first chip;
a state detection module 740 configured to detect , by using a second CTS pin whether a first RTS pin on the first chip is in an effective state, the second CTS pin being a pin connected with the first RTS pin on the first chip;
a data sending module 760 configured to, if the first RTS pin on the first chip is in the effective state, send data to the first chip through a second TXD pin, the second TXD pin being a pin connected with a first RXD pin on the first chip; and
a second sending module 780 configured to, when data transmission is completed, send a transmission completion signal to the first chip through the wakeup pin for the first chip to set the first RTS pin into an ineffective state according to the transmission completion signal and to determine according to a current running condition whether to enter a sleep state.

In the related technology, when a peripheral chip is in the working state, an RTS pin of the peripheral chip is in the effective state all the time. When the interference signal exists in the master chip, an RXD pin in the peripheral chip may receive an interference signal from the master chip, which may cause an operating abnormality of the peripheral chip. From the above, according to the pin control device provided by the embodiment, when data transmission is completed, the transmission completion signal is sent to the first chip through the wakeup chip, thereby the first chip sets the RTS pin into the ineffective state according to the transmission completion signal and determines according to the current running condition whether to enter the sleep state, solving the problem of the operating abnormality of the peripheral chip. When a sleep pin of the first chip receives the transmission completion signal sent by the second chip, the first RTS pin is set into the ineffective state, which makes that the RXD pin on the first chip may not receive an interference signal existing in the second chip, no matter whether the first chip enters the sleep state. The condition of operating abnormality of the first chip due to reception of the interference signal in the second chip is avoided.

Based on the pin control device shown in Fig. 7, the first sending module 720 is further configured to, when the wakeup pin is changed from a first level to a second level, send the data sending signal to the first chip through the wakeup pin.

Wherein, the first level is a high level and the second level is a low level. Or, the first level is a low level and the second level is a high level.

Optionally, the state detection module 740 is further configured to detect , by using the second CTS pin, whether the first RTS pin on the first chip is a third level, the third level being configured to represent that the first RTS pin is in the effective state and the third level being a high level or a low level.

Optionally, the second sending module 780 is further configured to, when the wakeup pin is changed from the second level to the first level, send the transmission completion signal to the first chip through the wakeup pin.

Wherein, the first level is a high level and the second level is a low level. Or, the first level is a high level and the second level is a high level.

Optionally, the first chip is a master chip, and the second chip is any one of a Bluetooth chip, a Wi-Fi chip, a radio frequency chip, a power chip, an LED chip and an audio and video chip; or, the first chip is any one of the Bluetooth chip, the Wi-Fi chip, the radio frequency chip, the power chip, the LED chip and the audio and video chip, and the second chip is the master chip.

With respect to the devices in the above embodiments, the specific manners for performing operations for individual modules therein have been described in detail in the embodiments regarding the methods, which will not be elaborated herein.

It will be appreciated by those skilled in the art that all or part of the steps of the abovementioned embodiment may be implemented by hardware, and may also be implemented by related hardware instructed by a program, the program may be stored in a computer-readable storage medium, and the abovementioned storage medium may be a read-only memory, a magnetic disk, an optical disk or the like.

The above is only the preferred embodiment of the present disclosure and not intended to limit the scope of the present invention which is defined by the claims.

## Claims

1. A pin control method, applied to a master chip comprising:
when a sleep pin receives a data sending signal sent by a chip, setting (201) a Request To Send, RTS, pin into an active status according to the data sending signal,
the sleep pin being a pin connected with a wakeup pin on the chip and the RTS pin being a pin connected with a Clear To Send, CTS, pin on the chip;
receiving (202) data sent by the chip, through a Receive Data, RXD, pin on the master chip, the RXD pin being in the active status when the RTS pin is in the active status and the RXD pin being a pin connected with a Transmit Data, TXD, pin on the chip; **characterized in that** the method comprises:
when the sleep pin receives a transmission completion signal sent by the wake up pin on the chip, setting (203) the RTS pin into an inactive status according to the transmission completion signal, when the RTS pin is in an inactive status, the RXD pin on the master chip is not allowed to receive the data; and
detecting whether there exists a data transmission task with the chip or another chip (408), wherein the master chip, the chip and the another chip are in a same device;
if there exists no data transmission task, determining to enter a sleep status (410);
if there exists a certain data transmission task, determining to keep a working status (409).

2. The method according to claim 1, wherein setting the RTS pin into the active status according to the data sending signal when the sleep pin receives the data sending signal sent by the chip comprises:
when the sleep pin is changed from a first level to a second level, setting the RTS pin into a third level (402), the third level being configured to represent that the RTS pin is in the active status.

3. The method according to claim 1, wherein setting the RTS pin into the inactive status according to the transmission completion signal when the sleep pin receives the transmission completion signal sent by the chip comprises:
when the sleep pin is changed from the second level to the first level, setting the RTS pin into a fourth level (407), the fourth level being configured to represent that the RTS pin is in the inactive status,
wherein the fourth level is different from the third level.

4. A pin control method, applied to a chip comprising:
sending (301) a data sending signal to a master chip through a wakeup pin, the wakeup pin being a pin connected with a sleep pin on the master chip;
detecting (302) , by using a Clear To Send, CTS, pin, whether a Request To Send, RTS, pin on the master chip is in an active status, the CTS pin being a pin connected with the RTS pin on the master chip;
if the RTS pin on the master chip is in the active status, sending (303) data to the master chip through a Transmit Data, TXD, pin, the TXD pin being a pin connected with an Receive Data, RXD, pin on the master chip; and **characterized in that**:
when data transmission is completed, sending (304) a transmission completion signal to the master chip through the wakeup pin, thereby the master chip sets the RTS pin into an inactive status according to the transmission completion signal,
when the RTS pin is in an inactive status, the RXD pin on the master chip is not allowed to receive the data, and detects whether it has a data transmission task with the chip or another chip (408), wherein the master chip, the chip and the another chip are in a same device; if there exists no data transmission task, the master chip determines to enter the sleep state (410); if there exists a certain data transmission task, the master chip determines to keep a working status (409).

5. The method according to claim 4, wherein detecting, by using the CTS pin, whether the RTS pin on the master chip is in the active status comprises:
detecting, by using the CTS pin, whether the RTS pin on the master chip is a third level, the third level being configured to represent that the RTS pin is in the active status.

6. The method according to claim 4, wherein sending the data sending signal to the master chip through the wakeup pin comprises:
when the wakeup pin is changed from a first level to a second level, sending the data sending signal to the master chip through the wakeup pin (401).

7. The method according to claim 4, wherein sending the transmission completion signal to the master chip through the wakeup pin when data transmission is completed comprises:
when the wakeup pin is changed from the second level to the first level, sending the transmission completion signal to the master chip through the wakeup pin (406).

8. A pin control device, applied to a master chip comprising:
a first receiving module (520) configured to, when a sleep pin receives a data sending signal sent by a chip, set a Request To Send, RTS, pin into an active status according to the data sending signal, the sleep pin being a pin connected with a wakeup pin on the chip and the RTS pin being a pin connected with a Clear To Send, CTS, pin on the chip;
a data receiving module (540) configured to receive data sent by the chip through a Receive Data, RXD, pin, the RXD pin being in the active status when the RTS pin is in the active status and the RXD pin being a pin connected with a Transmit Data, TXD, pin on the chip; **characterized in that**:
a second receiving module (560) configured to, when the sleep pin receives a transmission completion signal sent by the chip, set the RTS pin into an inactive status according to the transmission completion signal when the RTS pin is in the inactive status, the RXD pin on the master chip is not allowed to receive the data;
and
a state determination module (580) configured to comprise:
a demand detection sub-module (581) configured to detect whether there exists a data transmission task with the chip or another chip;
a sleep determination sub-module (582) configured to, if there exists no data transmission task, determine to enter the sleep status; and
a working determination sub-module (583) configured to, if there exists a certain data transmission task, determine to keep a working status.

9. The device according to claim 8, wherein the first receiving module (520) is further configured to, when the sleep pin is changed from a first level to a second level, set the RTS pin into a third level, the third level being configured to represent that the RTS pin is in the active status.

10. A pin control device, applied to a chip comprising:
a first sending module (720) configured to send a data sending signal to a master chip through a wakeup pin, the wakeup pin being a pin connected with a sleep pin on the master chip;
a state detection module (740) configured to detect, by using a Clear To Send, CTS, pin, whether a Request To Send, RTS, pin on the master chip is in an active status,
the CTS pin being a pin connected with the RTS pin on the master chip;
a data sending module (740) configured to, if the RTS pin on the master chip is in the active status, send data to the master chip through a Transmit Data, TXD, pin, the TXD pin being a pin connected with a Receive Data, RXD, pin on the master chip; and **characterized in that**:
a second sending module (780) configured to, when data transmission is completed, send a transmission completion signal to the master chip through the wakeup pin, thereby the master chip sets the RTS pin into an inactive status according to the transmission completion signal,
when the RTS pin is in the inactive status, the RXD pin on the master chip is not allowed to receive the data, and detects whether it has a data transmission task with the chip or another chip, wherein the master chip, the chip and the another chip are in a same device; if there exists no data transmission task, the master chip determines to enter the sleep status; if there exists a certain data transmission task, the master chip determines to keep a working status.

## Patentansprüche

1. Pin-Steuerungsverfahren, das auf einen Master-Chip angewandt wird, umfassend:
wenn ein Sleep-Pin ein von einem Chip gesendetes Datensendesignal empfängt, Setzen (201) eines Request-To-Send-, RTS-, Pins in einen aktiven Zustand gemäß dem Datensendesignal, wobei der Sleep-Pin ein mit einem Wakeup-Pin auf dem Chip verbundener Pin ist und der RTS-Pin ein mit einem Clear-To-Send-, CTS-, Pin auf dem Chip verbundener Pin ist;
Empfangen (202) von von dem Chip gesendeten Daten über einen Receive-Data-, RXD-, Pin auf dem Master-Chip, wobei der RXD-Pin in dem aktiven Zustand ist, wenn der RTS-Pin in dem aktiven Zustand ist, und der RXD-Pin ein mit einem Transmit-Data-, TXD-, Pin auf dem Chip verbundener Pin ist:
**dadurch gekennzeichnet, dass** das Verfahren umfasst:
wenn der Sleep-Pin ein von dem Wake-up-Pin auf dem Chip gesendetes Übertragungsbeendigungssignal empfängt, Setzen (203) des RTS-Pins in einen inaktiven Zustand gemäß dem Übertragungsbeendigungssignal, wenn der RTS-Pin in einem inaktiven Zustand ist, ist es dem RXD-Pin auf dem Master-Chip nicht erlaubt, die Daten zu empfangen; und
Erkennen, ob es eine Datenübertragungsaufgabe bei dem Chip oder einem anderen Chip (408) gibt, wobei sich der Master-Chip, der Chip und der andere Chip in einer gleichen Vorrichtung befinden;
wenn es keine Datenübertragungsaufgabe gibt, Bestimmen eines Eintritts in einen Ruhezustand (410);
wenn es eine bestimmte Datenübertragungsaufgabe gibt, Bestimmen eines Beibehaltens eines Arbeitszustands (409).

2. Verfahren nach Anspruch 1, wobei das Setzen des RTS-Pins in den aktiven Zustand gemäß dem Datensendesignal, wenn der Sleep-Pin das von dem Chip gesendete Datensendesignal empfängt, umfasst:
wenn der Sleep-Pin von einem ersten Pegel auf einen zweiten Pegel umgeschaltet wird, Setzen des RTS-Pins auf einen dritten Pegel (402), wobei der dritte Pegel dazu konfiguriert ist, darzustellen, dass der RTS-Pin in dem aktiven Zustand ist.

3. Verfahren nach Anspruch 1, wobei das Setzen des RTS-Pins in den inaktiven Zustand gemäß dem Übertragungsbeendigungssignal, wenn der Sleep-Pin das von dem Chip gesendete Übertragungsbeendigungssignal empfängt, umfasst:
wenn der Sleep-Pin von dem zweiten Pegel auf den ersten Pegel umgeschaltet wird, Setzen des RTS-Pins auf einen vierten Pegel (407), wobei der vierte Pegel dazu konfiguriert ist, darzustellen, dass der RTS-Pin in dem inaktiven Zustand ist,
wobei sich der vierte Pegel von dem dritten Pegel unterscheidet.

4. Pin-Steuerungsverfahren, das auf einen Chip angewandt wird, umfassend:
Senden (301) eines Datensendesignals an einen Master-Chip über einen Wakeup-Pin, wobei der Wakeup-Pin ein mit einem Sleep-Pin auf dem Master-Chip verbundener Pin ist;
Erkennen (302), unter Verwendung eines Clear-To-Send-, CTS-, Pins, ob ein Request-To-Send-, RTS-, Pin auf dem Master-Chip in einem aktiven Zustand ist, wobei der CTS-Pin ein mit dem RTS-Pin auf dem Master-Chip verbundener Pin ist;
wenn der RTS-Pin auf dem Master-Chip in dem aktiven Zustand ist, Senden (303) von Daten an den Master-Chip über einen Transmit-Data-, TXD-, Pin, wobei der TXD-Pin ein mit einem Receive-Data-, RXD-, Pin auf dem Master-Chip verbundener Pin ist; und
**dadurch gekennzeichnet, dass**:
wenn die Datenübertragung beendet ist, Senden (304) eines Übertragungsbeendigungssignals an den Master-Chip über den Wakeup-Pin, wodurch der Master-Chip den RTS-Pin entsprechend dem Übertragungsbeendigungssignal in einen inaktiven Zustand setzt, wenn der RTS-Pin in einem inaktiven Zustand ist, ist es dem RXD-Pin auf dem Master-Chip nicht erlaubt, die Daten zu empfangen, und erkennt, ob er eine Datenübertragungsaufgabe bei dem Chip oder einem anderen Chip (408) hat, wobei sich der Master-Chip, der Chip und der andere Chip in einer gleichen Vorrichtung befinden; wenn es keine Datenübertragungsaufgabe gibt, der Master-Chip bestimmt, in den Ruhezustand einzutreten (410); wenn es eine bestimmte Datenübertragungsaufgabe gibt, der Master-Chip bestimmt, einen Arbeitszustand (409) beizubehalten.

5. Verfahren nach Anspruch 4, wobei das Erkennen, unter Verwendung des CTS-Pins, ob der RTS-Pin auf dem Master-Chip in dem aktiven Zustand ist, umfasst:
Erkennen, unter Verwendung des CTS-Pins, ob der RTS-Pin auf dem Master-Chip auf einem dritten Pegel ist, wobei der dritte Pegel dazu konfiguriert ist, darzustellen, dass der RTS-Pin in dem aktiven Zustand ist.

6. Verfahren nach Anspruch 4, wobei das Senden des Datensendesignals an den Master-Chip über den Wakeup-Pin umfasst:
wenn der Wakeup-Pin von einem ersten Pegel auf einen zweiten Pegel umgeschaltet wird, Senden des Datensendesignals an den Master-Chip über den Wakeup-Pin (401).

7. Verfahren nach Anspruch 4, wobei das Senden des Übertragungsbeendigungssignals an den Master-Chip über den Wakeup-Pin, wenn die Datenübertragung beendet ist, umfasst:
wenn der Wakeup-Pin von dem zweiten Pegel auf den ersten Pegel umgeschaltet wird, Senden des Übertragungsbeendigungssignals an den Master-Chip über den Wakeup-Pin (406).

8. Pin-Steuervorrichtung, die auf einen Master-Chip angewandt wird, umfassend:
ein erstes Empfangsmodul (520), das so konfiguriert ist, dass es, wenn ein Sleep-Pin ein von einem Chip gesendetes Datensendesignal empfängt, einen Request-To-Send-, RTS-, Pin gemäß dem Datensendesignal in einen aktiven Zustand setzt, wobei der Sleep-Pin ein mit einem Wakeup-Pin auf dem Chip verbundener Pin ist und der RTS-Pin ein mit einem Clear-To-Send-, CTS-, Pin auf dem Chip verbundener Pin ist;
ein Datenempfangsmodul (540), das so konfiguriert ist, dass es von dem Chip über einen Receive-Data-, RXD-, Pin gesendete Daten empfängt, wobei der RXD-Pin in dem aktiven Zustand ist, wenn der RTS-Pin in dem aktiven Zustand ist, und der RXD-Pin ein mit einem Transmit-Data-, TXD-, Pin auf dem Chip verbundener Pin ist;
**dadurch gekennzeichnet, dass**:
ein zweites Empfangsmodul (560) so konfiguriert ist, dass es, wenn der Sleep-Pin ein von dem Chip gesendetes Übertragungsbeendigungssignal empfängt, den RTS-Pin gemäß dem Übertragungsbeendigungssignal in einen inaktiven Zustand setzt, wenn der RTS-Pin in dem inaktiven Zustand ist, ist es dem RXD-Pin auf dem Master-Chip nicht erlaubt, die Daten zu empfangen; und
ein Zustandsbestimmungsmodul (580), das dazu konfiguriert ist, zu umfassen:
ein Bedarfserkennungsuntermodul (581), das dazu konfiguriert ist, zu erkennen, ob es eine Datenübertragungsaufgabe bei dem Chip oder einem anderen Chip gibt;
ein Ruhebestimmungsuntermodul (582), das dazu konfiguriert ist, den Eintritt in den Ruhezustand zu bestimmen, wenn es keine Datenübertragungsaufgabe gibt; und
ein Arbeitsbestimmungsuntermodul (583), das dazu konfiguriert ist, zu bestimmen, einen Arbeitszustand beizubehalten, wenn es eine bestimmte Datenübertragungsaufgabe gibt.

9. Vorrichtung nach Anspruch 8, wobei das erste Empfangsmodul (520) weiter so konfiguriert ist, dass es, wenn der Sleep-Pin von einem ersten Pegel auf einen zweiten Pegel umgeschaltet wird, den RTS-Pin auf einen dritten Pegel setzt, wobei der dritte Pegel dazu konfiguriert ist, darzustellen, dass der RTS-Pin in dem aktiven Zustand ist.

10. Pin-Steuervorrichtung, die auf einen Chip angewandt wird, umfassend:
ein erstes Sendemodul (720), das dazu konfiguriert ist, ein Datensendesignal über einen Wakeup-Pin an einen Master-Chip zu senden, wobei der Wakeup-Pin ein mit einem Sleep-Pin auf dem Master-Chip verbundener Pin ist;
ein Zustandserkennungsmodul (740), das dazu konfiguriert ist, unter Verwendung eines Clear-To-Send-, CTS-, Pins zu erkennen, ob ein Request-To-Send-, RTS-, Pin auf dem Master-Chip in einem aktiven Zustand ist, wobei der CTS-Pin ein mit dem RTS-Pin auf dem Master-Chip verbundener Pin ist;
ein Datensendemodul (740), das so konfiguriert ist, dass es, wenn der RTS-Pin auf dem Master-Chip in dem aktiven Zustand ist, Daten über einen Transmit-Data-, TXD-, Pin an den Master-Chip sendet, wobei der TXD-Pin ein mit einem Receive-Data-, RXD-, Pin auf dem Master-Chip verbundener Pin ist; und
**dadurch gekennzeichnet, dass**:
ein zweites Sendemodul (780), das so konfiguriert ist, dass es, wenn die Datenübertragung beendet ist, ein Übertragungsbeendigungssignal über den Wakeup-Pin an den Master-Chip sendet, wodurch der Master-Chip den RTS-Pin gemäß dem Übertragungsbeendigungssignal in einen inaktiven Zustand setzt, wenn der RTS-Pin in dem inaktiven Zustand ist, ist es dem RXD-Pin auf dem Master-Chip nicht erlaubt, die Daten zu empfangen, und erkennt, ob er eine Datenübertragungsaufgabe bei dem Chip oder einem anderen Chip hat, wobei sich der Master-Chip, der Chip und der andere Chip in einer gleichen Vorrichtung befinden; wenn es keine Datenübertragungsaufgabe gibt, der Master-Chip bestimmt, in den Ruhezustand einzutreten; wenn es eine bestimmte Datenübertragungsaufgabe gibt, der Master-Chip bestimmt, einen Arbeitszustand beizubehalten.

## Revendications

1. Procédé de commande de broche, appliqué à une puce maître comprenant :
lorsqu'une broche de sommeil reçoit un signal d'envoi de données envoyé par une puce, le réglage (201) d'une broche de demande d'envoi, RTS, dans un état actif en fonction du signal d'envoi de données, la broche de sommeil étant une broche reliée à une broche de réveil sur la puce et la broche RTS étant une broche reliée à une broche d'autorisation d'envoi, CTS, sur la puce ;
la réception (202) de données envoyés par la puce, à travers une broche de réception de données, RXD, sur la puce maître, la broche RXD étant dans l'état actif lorsque la broche RTS est dans l'état actif et la broche RXD étant une broche reliée à une broche de transmission de données, TXD, sur la puce :
**caractérisé en ce que** le procédé comprend :
lorsque la broche de sommeil reçoit un signal de fin de transmission envoyé par la broche de réveil sur la puce, le réglage (203) de la broche RTS dans un état inactif en fonction du signal de fin de transmission, lorsque la broche RTS est dans un état inactif, la broche RXD sur la puce maître n'est pas autorisée à recevoir les données ; et
la détection s'il existe une tâche de transmission de données avec la puce ou une autre puce (408), dans lequel la puce maître, la puce et l'autre puce sont dans un même dispositif ;
s'il n'existe pas de tâche de transmission de données, la détermination d'entrer dans un état de sommeil (410) ;
s'il existe une certaine tâche de transmission de données, la détermination de maintenir un état de fonctionnement (409).

2. Procédé selon la revendication 1, dans lequel le réglage de la broche RTS dans l'état actif en fonction du signal d'envoi de données lorsque la broche de sommeil reçoit le signal d'envoi de données envoyé par la puce comprend :
lorsque la broche de sommeil est changée d'un premier niveau à un deuxième niveau, le réglage de la broche RTS à un troisième niveau (402), le troisième niveau étant configuré pour représenter que la broche RTS est dans l'état actif.

3. Procédé selon la revendication 1, dans lequel le réglage de la broche RTS dans l'état inactif en fonction du signal de fin de transmission lorsque la broche de sommeil reçoit le signal de fin de transmission envoyé par la puce comprend :
lorsque la broche de sommeil est changée du deuxième au premier niveau, le réglage de la broche RTS à un quatrième niveau (407), le quatrième niveau étant configuré pour représenter que la broche RTS est dans l'état inactif,
dans lequel le quatrième niveau est différent du troisième niveau.

4. Procédé de commande de broche, appliqué à une puce comprenant :
l'envoi (301) d'un signal d'envoi de données à une puce maître à travers une broche de réveil, la broche de réveil étant une broche reliée à une broche de sommeil sur la puce maître ;
la détection (302), en utilisant une broche d'autorisation d'envoi, CTS, si une broche de demande d'envoi, RTS, sur la puce maître est dans un état inactif, la broche CTS étant une broche reliée à la broche RTS sur la puce maître ;
si la broche RTS sur la puce maître est dans l'état actif, l'envoi (303) de données à la puce maître à travers une broche de transmission de données, TXD, la broche TXD étant une broche reliée à une broche de réception de données, RXD, sur la puce maître ; et
**caractérisé en ce que** :
lorsqu'une transmission de données est terminée, l'envoi (304) d'un signal de fin de transmission à la puce maître à travers la broche de réveil, de ce fait la puce maître règle la broche RTS dans un état inactif en fonction du signal de fin de transmission, lorsque la broche RTS est dans un état inactif, la broche RXD sur la puce maître n'est pas autorisée à recevoir les données, et détecte si elle a une tâche de transmission de données avec la puce ou une autre puce (408), dans lequel la puce maître, la puce et l'autre puce sont dans un même dispositif; s'il n'existe pas de tâche de transmission de données, la puce maître détermine d'entrer dans l'état de sommeil (410) ; s'il existe une certaine tâche de transmission de données, la puce maître détermine de maintenir l'état de fonctionnement (409).

5. Procédé selon la revendication 4, dans lequel la détection, en utilisant la broche CTS, si la broche RTS sur la puce maître est dans l'état actif comprend :
la détection, en utilisant la broche CTS, si la broche RTS sur la puce maître est à un troisième niveau, le troisième niveau étant configuré pour représenter que la broche RTS est dans l'état actif.

6. Procédé selon la revendication 4, dans lequel l'envoi du signal d'envoi de données à la puce maître à travers la broche de réveil comprend :
lorsque la broche de réveil est changée d'un premier niveau à un deuxième niveau, l'envoi du signal d'envoi de données à la puce maître à travers la broche de réveil (401).

7. Procédé selon la revendication 4, dans lequel l'envoi du signal de fin de transmission à la puce maître à travers la broche de réveil lorsqu'une transmission de données est terminée comprend :
lorsque la broche de réveil est changée du deuxième niveau au premier niveau, l'envoi du signal de fin de transmission à la puce maître à travers la broche de réveil (406).

8. Dispositif de commande de broche, appliqué à une puce maître comprenant :
un premier module de réception (520) configuré pour, lorsqu'une broche de sommeil reçoit un signal d'envoi de données envoyé par une puce, régler une broche de demande d'envoi, RTS, dans un état actif en fonction du signal d'envoi de données, la broche de sommeil étant une broche reliée à une broche de réveil sur la puce et la broche RTS étant une broche reliée à une broche d'autorisation d'envoi, CTS, sur la puce ;
un module de réception de données (540) configuré pour recevoir des données envoyés par la puce, à travers une broche de réception de données, RXD, la broche RXD étant dans l'état actif lorsque la broche RTS est dans l'état actif et la broche RXD étant une broche reliée à une broche de transmission de données, TXD, sur la puce ;
**caractérisé en ce que** :
un second module de réception (560) configuré pour, lorsque la broche de sommeil reçoit un signal de fin de transmission envoyé par la puce, régler la broche RTS dans un état inactif en fonction du signal de fin de transmission, dans lequel lorsque la broche RTS est dans l'état inactif, la broche RXD sur la puce maître n'est pas autorisée à recevoir les données ; et
un module de détermination d'état (580) configuré pour comprendre :
un sous-module de détection de demande (581) configuré pour détecter s'il existe une tâche de transmission de données avec la puce ou une autre puce ;
un sous-module de détermination de sommeil (582) configuré pour, s'il n'existe pas de tâche de transmission de données, déterminer d'entrer dans l'état de sommeil ; et
un sous-module de détermination de fonctionnement (583) configuré pour, s'il existe une certaine tâche de transmission de données, déterminer de maintenir un état de fonctionnement.

9. Dispositif de commande de broche selon la revendication 8, dans lequel le premier module de réception (520) est en outre configuré pour, lorsque la broche de sommeil est changée d'un premier niveau à un deuxième niveau, régler la broche RTS à un troisième niveau, le troisième niveau étant configuré pour représenter que la broche RTS est dans l'état actif.

10. Dispositif de commande de broche, appliqué à une puce comprenant :
un premier module d'envoi (720) configuré pour envoyer un signal d'envoi de données à une puce maître à travers une broche de réveil, la broche de réveil étant une broche reliée à une broche de sommeil sur la puce maître ;
un module de détection d'état (740) configuré pour détecter, en utilisant une broche d'autorisation d'envoi, CTS, si une broche de demande d'envoi, RTS, sur la puce maître est dans un état inactif, la broche CTS étant une broche reliée à la broche RTS sur la puce maître ;
un module d'envoi de données (740) configuré pour, si la broche RTS sur la puce maître est dans l'état actif, envoyer des données à la puce maître à travers une broche de transmission de données, TXD, la broche TXD étant une broche reliée à une broche de réception de données, RXD, sur la puce maître ; et
**caractérisé en ce que** :
un second module d'envoi (780) configuré pour, lorsqu'une transmission de données est terminée, envoyer un signal de fin de transmission à la puce maître à travers la broche de réveil, de ce fait la puce maître règle la broche RTS dans un état inactif en fonction du signal de fin de transmission, lorsque la broche RTS est dans l'état inactif, la broche RXD sur la puce maître n'est pas autorisée à recevoir les données, et détecte si elle a une tâche de transmission de données avec la puce ou une autre puce, dans lequel la puce maître, la puce et l'autre puce sont dans un même dispositif; s'il n'existe pas de tâche de transmission de données, la puce maître détermine d'entrer dans l'état de sommeil ; s'il existe une certaine tâche de transmission de données, la puce maître détermine de maintenir l'état de fonctionnement.
